# EUROPÄISCHE PATENTSCHRIFT

(11) **EP 2 679 092 B1**
(45) Veröffentlichungstag und Bekanntmachung des Hinweises auf die Patenterteilung: **25.03.2015**
(21) Anmeldenummer: 13002886.3
(22) Anmeldetag: 05.06.2013
(51) Int. Cl.: B65D 83/38, B05B 7/14, B05B 7/24, A01M 7/00

(54) **Sprüheinrichtung, Sprühgerät und Verfahren zum Betrieb eines Sprühgerätes**
Spray device, spraying apparatus and method for operating a spray device
Dispositif de vaporisation, appareil de vaporisation et procédé de fonctionnement d'un appareil de vaporisation

(30) Priorität: 28.06.2012 DE 102012012800
(43) Veröffentlichungstag der Anmeldung: 01.01.2014
(73) Patentinhaber: Andreas Stihl AG & Co. KG, 71336 Waiblingen (DE)
(72) Erfinder: Langhans, Klaus, 71364 Winnenden (DE); Densborn, Gerd, 71334 Waiblingen (DE); Schmidt, Christian, 71409 Schwaikheim (DE); Gegg, Tim, 71686 Remseck (DE); Strauss, Martin, 74076 Heilbronn (DE)
(74) Vertreter: Zurhorst, Stefan

(56) Entgegenhaltungen:
- US-A1- 2009 008 473
- US-B1- 6 409 097

## Beschreibung

Die Erfindung betrifft eine Sprüheinrichtung für ein handgeführtes Blasgerät der im Oberbegriff des Anspruchs 1 angegebenen Gattung, ein handgeführtes Sprühgerät mit einer solchen Sprüheinrichtung sowie ein Verfahren zum Betrieb eines handgeführten Sprühgerätes.

Pflanzenschutzmittel werden beispielsweise im Obst-, Wein- und Gemüseanbau, im Wald und in Baumschulen oder dergleichen mittels eines rückengetragenen, handgeführten Sprühgerätes ausgebracht. Ein solches Sprühgerät basiert auf einem üblichen Blasgerät mit einer motorisch angetriebenen Gebläseeinheit zur Erzeugung eines Blasluftstromes, an dem ein den Blasluftstrom führendes Blasrohr angebracht ist, und wie es beispielsweise als Laubblasgerät eingesetzt wird. Zusätzlich ist das Blasgerät mit einem Sprühmittelbehälter und mit einer vom Sprühmittelbehälter zu einem ausgangsseitigen Ende des Blasrohres führenden Sprühmittelleitung versehen. Am ausgangsseitigen Ende des Blasrohres wird eine Sprüheinrichtung befestigt, deren Luftkanalanordnung den Blasluftstrom durch eine Luftdüse leitet. Eine durch die Sprühmittelleitung mit dem Sprühmittel versorgte Sprühmitteldüse bringt das Sprühmittel in den Blasluftstrom ein, wo es vom Blasluftstrom zerstäubt wird, und wodurch ein Gemisch aus Blasluftstrom und darin mitgetragenen, zerstäubten Sprühmitteltröpfchen entsteht. Der Benutzer lenkt das Blasrohr und damit auch den austretenden Blasluftstrom derart zum Zielort, dass die mitgeführten Sprühmitteltröpfchen an die Blätter oder andere gewünschte Pflanzenteile geraten.

In der Praxis zeigen sich hierbei verschiedene Schwierigkeiten. Zielgenauigkeit, Durchdringung des Laubs, Gleichmäßigkeit der Blattbenetzung auf der Ober- und Unterseite sind nicht optimal. Bei der Zerstäubung entsteht ein unerwünscht breites und undefiniertes Tropfengrößenspektrum mit einem kleinen mittleren volumetrischen Durchmesser. Solche Tröpfchen sind anfällig gegen Windabdrift, was die Effizienz des Sprühmitteleinsatzes hinsichtlich der verbrauchten Menge, der zielgenauen Ausbringung, des erzielten Arbeitsfortschritts und auch des Anwenderschutzes beeinträchtigt. Immer strenger werdende diesbezügliche Richtlinien sind zunehmend schwer einzuhalten.

Dokument US2009/008473 A1 beschriebt eine Sprüheinrichtung für ein handgeführtes Blasgerät gemäß dem Oberbegriff des Anspruchs 1.

Der Erfindung liegt die Aufgabe zugrunde, eine gattungsgemäße Sprüheinrichtung derart weiterzubilden, dass ein effizienterer Sprühmitteltransport erzielt wird.

Diese Aufgabe wird durch eine Sprüheinrichtung mit den Merkmalen des Anspruchs 1 gelöst.

Der Erfindung liegt des Weiteren die Aufgabe zugrunde, ein entsprechendes Sprühgerät mit verbesserter Wirksamkeit anzugeben.

Diese Aufgabe wird durch ein Sprühgerät mit den Merkmalen des Anspruchs 12 gelöst.

Darüber hinaus liegt der Erfindung die Aufgabe zugrunde, ein Verfahren zum Betrieb eines solchen handgeführten Sprühgerätes anzugeben, mittels dessen das Sprühmittel zielgenauer und zuverlässi- ger an den Zielort gebracht werden kann.

Diese Aufgabe wird durch ein Verfahren mit den Merkmalen des Anspruchs 17 gelöst.

Nach der Erfindung ist vorgesehen, dass die Luftkanalanordnung der Sprüheinrichtung zwei Ausgangskanalabschnitte umfasst, wobei die beiden Ausgangskanalabschnitte in zwei bezogen auf die Längsachse in einer Seitenrichtung nebeneinander angeordnete Luftdüsen derart münden, dass im Betrieb zwischen den beiden Luftdüsen ein zumindest näherungsweise luftströmungsfreier Raum gebildet ist. Die Sprühmitteldüse ist in diesem luftströmungsfreien Raum positioniert.

Durch die beiden nebeneinander angeordneten Ausgangskanalabschnitte mit den zugeordneten Luftdüsen wird der Blasluftstrom in zwei aus den beiden Luftdüsen austretende Teilluftströme aufgeteilt, die nach dem Austritt aus der jeweiligen Luftdüse über einen bestimmten Laufweg getrennt und unabhängig voneinander strömen, bevor sie nach diesem Laufweg bzw. nach einem Einkoppelweg aufeinandertreffen und sich zu einem gemeinsamen Luftstrom vereinigen. Der Zwischenraum sowohl im Bereich der Luftdüsen als auch stromab davon bis hin zum Punkt des Zusammentreffens beider Teilluftströme ist im Wesentlichen luftströmungsfrei. Der hier gewählte Begriff des "luftströmungsfreien Raums" bedeutet nicht ein Ort absoluter Luftruhe. Vielmehr bedeutet er im Sinne der Erfindung einen Raum, der nicht von den beiden gerichtet austretenden Blasluftströmen direkt beaufschlagt ist und deshalb im Vergleich zu den gerichteten Blasluftströmen eine allenfalls geringe Luftbewegung erfährt. Mittels der in diesem luftströmungsfreien Raum positionierten Sprühmitteldüse wird dort das Sprühmittel mittels Druck zu Tröpfchen zerstäubt und in den luftströmungsfreien Raum eingebracht.

Die erfindungsgemäße Anordnung und das zugehörige erfindungsgemäße Verfahren basiert auf der Erkenntnis, dass die Tröpfchenbildung beim herkömmlichen Einbringen des Sprühmittels direkt in den Luftstrom nach dem Stand der Technik auf einem bestimmten Effekt beruht. Unter geringem, beispielsweise geodätischem Druck wird das Sprühmittel in Form eines feinen Strahls aus der Sprühmitteldüse gefördert. Erst danach findet eine sogenannte Sekundärzerstäubung des Sprühmittels durch die Interaktion des Luftstromes mit dem eingebrachten, zunächst zusammenhängenden Sprühmittelstrahl statt. Diese Sekundärzerstäubung führt einerseits zu einem sehr breiten und undefinierten Tropfengrößenspektrum mit andererseits einem sehr kleinen mittleren volumetrischen Durchmesser der Tröpfchen. Diese sind nur mit geringer Zielgenauigkeit und hoher Empfindlichkeit gegen Windabdrift an den Zielort zu bringen.

Demgegenüber erfolgt die Tröpfchenbildung nach der Erfindung im luftströmungsfreien Raum mittels der Sprühmitteldüse, wodurch die Sekundärzerstäubung entfällt oder zumindest gering ist. Durch geeignete Ausgestaltung der Sprühmitteldüse und Anpassung des Sprühmitteldruckes kann eine bestimmte, nicht zu feine Tröpfchengröße innerhalb eines vergleichsweise schmalen und gut definierten Tropfengrößenspektrums mit einem gegenüber dem Stand der Technik vergrößerten mittleren volumetrischen Durchmesser eingestellt werden. Aufgrund ihrer Größe und schmalbandigen Durchmesserverteilung haben diese Tröpfchen erheblich verbesserte Transporteigenschaften mit erhöhter Zielgenauigkeit und verringerter Neigung zur Abdrift. Nach dem Austritt des Sprühmittels aus der Sprühmitteldüse und erfolgter Zerstäubung ohne Einwirkung der beiden Luftströme bewegen sich die Tröpfchen zum Zielort zunächst nur aufgrund ihrer Düsenaustrittsgeschwindigkeit. Die Interaktion mit den beiden seitlich davon verlaufenden Teilluftströmen beschränkt sich auf eine sanfte Beschleunigung und Transportwirkung, wodurch über einen längeren Laufweg die unerwünschte Sekundärzerstäubung unterbleibt oder zumindest sich in überschaubaren Grenzen hält. Die beiden seitlich verlaufenden Teilluftströme wirken darüber hinaus als Luftvorhänge, die das zerstäubte Sprühmittel gegen Seitenwind und andere unerwünschte äußere Einflüsse abschirmen.

Erst am Ende eines bestimmten Einkoppelweges treffen die beiden Teilluftströme aufeinander und auch auf die Sprühmitteltröpfchen, wodurch sich ein zumindest näherungsweise homogener Luftströmungsquerschnitt mit eingebetteten Sprühmitteltröpfchen ausbildet. Aufgrund ihrer Größe und schmalbandigen Durchmesserverteilung werden diese Tröpfchen dann gemeinsam mit dem Luftstrom zielgenau zum Zielort getragen. Es wird eine gute, wirksame Durchdringung des Blattwerks mit gleichmäßiger Blattbenetzung unter effizientem Sprühmitteleinsatz erreicht.

In bevorzugter Weiterbildung weisen die beiden Luftdüsen jeweils einander zugewandte Innenwände auf, wobei die beiden Innenwände im Austrittsbereich der jeweiligen Luftdüse in einem Wandwinkel zur Längsachse liegen, und wobei der Betrag des Wandwinkels bei einer Neigung der Innenwand zur Längsachse hin positiv definiert ist. Bezogen auf die vorgenannte Definition des positiven Betrages bzw. der positiven Winkelrichtung liegt der Wandwinkel bevorzugt in einem Bereich von einschließlich ≤ 20° bis einschließlich ≥ -10° und beträgt insbesondere zumindest näherungsweise 0°. Hierdurch wird erreicht, dass die beiden anfänglich getrennten Teilluftströme sich erst nach einer bestimmten Lauflänge vereinigen, davor aber den zumindest näherungsweise luftströmungsfreien Raum einschließen, in den die Sprühmitteltröpfchen eingebracht und unter Vermeidung von Sekundärzerstäubung beschleunigt werden.

In einer zweckmäßigen Ausführungsform sind die Luftdüsen als Flachdüsen mit je einer langen und einer kurzen Querschnittsachse ausgebildet, wobei die beiden langen Querschnittachsen zumindest näherungsweise parallel zueinander liegen. Zweckmäßig liegt das Verhältnis einer Länge der langen Querschnittsachse zu einer Länge der zugeordneten kurzen Querschnittsachse in einem Bereich von einschließlich 3,0 bis einschließlich 10,0, bevorzugt in einem Bereich von einschließlich 4,0 bis einschließlich 7,0, und beträgt insbesondere etwa 5,4. Durch die genannte geometrische Ausgestaltung der Luftdüsen entstehen zwei parallele, flache Luftvorhänge, die die dazwischen bewegten Sprühmitteltröpfchen zuverlässig gegen äußere Einflüsse wie Seitenwind oder dergleichen abschirmen, und die andererseits sich erst ab einer klar definierten Lauflänge ohne frühzeitige nachteilige Interaktion mit den Sprühmitteltröpfchen vereinigen.

Die beiden Luftdüsen weisen einander zugewandte Innenkanten mit einem seitlichen Abstand zueinander auf. Vorteilhaft liegt der Abstand in einem Bereich von einschl. 10 mm bis einschl. 80 mm, bevorzugt in einem Bereich von einschl. 20 mm bis einschl. 50 mm, und beträgt insbesondere etwa 30 mm.

Eine durch den Abstand der beiden einander zugewandten Innenkanten vorgegebene Verbindungslinie bildet zusammen mit der Längsachse einen Kreuzungspunkt. Die Ausgangsseite der Sprühmitteldüse kann in Richtung der Längsachse um ein Versatzmaß gegenüber diesem Kreuzungspunkt verschoben sein, wobei ein positiver Betrag dieses Versatzmaßes ausgehend vom Kreuzungspunkt in Ausblasrichtung definiert ist, wobei also das Versatzmaß in Ausblasrichtung einen positiven Betrag aufweist. Das Versatzmaß ist bevorzugt ≤ dem vorgenannten Abstand und weist insbesondere einen negativen Betrag auf. Mit anderen Worten kann die Ausgangsseite der Sprühmitteldüse bezogen auf den genannten Kreuzungspunkt vorteilhaft in einem Bereich liegen, wo sie entweder gegenüber den Innenkanten der Luftdüsen zurückgezogen ist, auf gleicher Höhe liegt, oder aber über ein begrenztes Maß nach vorne hervorsteht. In dem genannten Wertebereich ist sichergestellt, dass das austretende und zu Tröpfchen zerstäubte Sprühmittel nicht zu früh in Wechselwirkung mit den beiden seitlichen Teilluftströmen gerät, was zu einer unerwünscht hohen Geschwindigkeitsdifferenz mit ebenfalls unerwünscht hoher Sekundärzerstäubung führen würde.

Die beiden Luftdüsen sind vorteilhaft als Fächerdüsen mit einem Öffnungswinkel ausgebildet, wobei der Öffnungswinkel zweckmäßig in einem Bereich von einschl. 10° bis einschl. 45° liegt und insbesondere etwa 30° beträgt. Die Sprühmitteldüse ist bevorzugt als Fächerdüse mit einer Fächerebene ausgebildet, wobei die Fächerebene senkrecht zur seitlichen Abstandsrichtung zwischen den beiden Luftdüsen liegt. Der zugehörige Fächerwinkel liegt bevorzugt in einem Bereich von einschl. 70° bis einschl. 120° und beträgt insbesondere etwa 90°. Diese geometrischen Angaben haben sich als zweckmäßig herausgestellt, um wirksam seitliche Luftvorhänge mit sanfter Tröpfchenbeschleunigung ohne übermäßige Sekundärzerstäubung zu erzeugen, während gleichzeitig der weiter stromab sich ausbildende, Tröpfchen führende Gesamtstrahl zielgenau zum Zielort geführt werden kann.

Es kann zweckmäßig sein, zwei separate Einzelkanäle mit zugehörigen Luftdüsen vorzusehen, wobei sich die Sprühmitteldüse zwischen den beiden Einzelkanälen befindet. In vorteilhafter Weiterbildung ist die Luftkanalanordnung durch einen Y-förmig verzweigten Luftkanal mit einem Eingangskanalabschnitt und zwei Ausgangskanalabschnitten gebildet. Hierdurch ist eine kompakte Bauform geschaffen, mittels derer die Sprüheinrichtung als Einheit ohne Weiteres beispielsweise auf das Ausgangsende des Blasrohres aufgesteckt werden kann.

Für die Sprühmitteldüse kommen verschiedene Bauformen in Betracht. Vorteilhaft ist die Sprühmitteldüse als Injektordüse ausgeführt. Nach dem Injektorprinzip saugt der Sprühmittelstrom innerhalb der Sprühmitteldüse Luft an, wodurch ein Flüssigkeits-Luft-Gemisch entsteht. Dies trägt zu der gewünschten Primärzerstäubung ohne das Vorhandensein einer luftstrombedingten Sekundärzerstäubung bei.

Durch die seitliche Anordnung der beiden Luftdüsen entsteht auch weiter stromab ein im Querschnitt unrunder, flacher Gesamtstrahl, dessen flache Querschnittsform nutzbringend eingesetzt werden kann. Hierzu ist in vorteilhafter Weiterbildung die Sprüheinrichtung um ihre Längsachse drehbar am Ausgang des Blasrohres befestigt bzw. befestigbar. Dies ermöglicht es dem Benutzer, nach Wahl und angepasst an den jeweiligen Einsatzzweck eine aufrecht stehende, horizontal liegende oder diagonal bzw. schräg stehende lange Querschnittsachse des flachen Gesamtstrahls zu wählen. Hierdurch kann die Arbeitseffizienz gesteigert werden.

Zweckmäßig ist eine Druckpumpe für die Druckförderung des Sprühmittels durch die Sprüheinrichtung bzw. durch die Sprühmitteldüse vorgesehen. Gegenüber einer geodätischen Druckförderung lassen sich erheblich höhere Sprühmitteldrücke und auch eine bessere Druckkonstanz mit gleichmäßiger Tröpfchenbildung erzielen.

Für den praktischen Betrieb haben sich zwei Bauformen des Sprühgerätes als zweckmäßig herausgestellt. In einer Bauform weist das Blasrohr an seinem der Gebläseeinheit gegenüberliegenden Ende mindestens einen Ausgang auf, an dem die Sprüheinrichtung angeordnet ist. Hierdurch kann bei einfachem konstruktivem Aufbau eine zielgerichtete Sprühmittelverteilung erreicht werden. Alternativ oder in Kombination damit weist das Blasrohr seitlich mindestens einen und insbesondere mehrere Ausgänge auf, an denen je eine Sprüheinrichtung angeordnet ist. Hierdurch ist eine großflächige Sprühmittelverteilung ohne viel Bewegungsaufwand möglich.

Für den Betrieb des erfindungsgemäßen Sprühgerätes können je nach Anforderung verschiedene Parameter eingestellt werden. In entsprechenden Betriebsverfahren haben sich folgende Parameter als zweckmäßig herausgestellt:

Die Luftströmungsgeschwindigkeit der beiden aus den Luftdüsen austretenden Teilluftströme liegt vorteilhaft in einem Bereich von einschl. 30 m/s bis einschl. 120 m/s und beträgt insbesondere etwa 70 m/s. Die Tröpfchengeschwindigkeit des zu Tröpfchen zerstäubten Sprühmittels liegt zweckmäßig in einem Bereich von einschl. 2 m/s bis einschl. 40 m/s und beträgt insbesondere etwa 10 m/s. Der von der Druckpumpe erzeugte Sprühmitteldruck liegt bevorzugt in einem Bereich von einschließlich 2 bar bis einschließlich 15 bar und beträgt insbesondere etwa 5 bar. Die beiden Teilluftströme treffen ausgehend von den Luftdüsen nach einem Einkoppelweg in einem Einkoppelpunkt aufeinander. Der Einkoppelweg liegt vorteilhaft in einem Bereich von einschl. 50 mm bis einschl. 500 mm und beträgt insbesondere etwa 200 mm. Alle relevanten Betriebsparameter werden vorteilhaft derart eingestellt, dass sich am Ende des Einkoppelwegs eine Geschwindigkeitsdifferenz zwischen den Teilluftströmen und den Tröpfchen einstellt, die kleiner 10 m/s ist und insbesondere zu einer Weberzahl We < 12 führt. Die Weberzahl ist eine dimensionslose Kennzahl gebildet aus dem Quotienten von Trägheitskraft und Oberflächenkraft. Durch die genannte Limitierung der Weberzahl wird die unerwünschte Sekundärzerstäubung vermieden oder zumindest in akzeptablen Grenzen gehalten.

Stromab des Einkoppelpunktes stellt sich ein Gemisch aus den Teilluftströmen und den Tröpfchen ein, wobei das Gemisch eine Gemischgeschwindigkeit aufweist, die vorteilhaft in einem Bereich von einschl. 10 m/s bis einschl. 80 m/s liegt und insbesondere etwa 40 m/s beträgt. Hierdurch können Blätter schädigungsfrei gewendet und auch auf ihrer Unterseite mit dem Sprühmittel benetzt werden, ohne dass die zu behandelnden Pflanzen übermäßig beansprucht werden. Zielgenauigkeit, Unempfindlichkeit gegen Störeinflüsse und Arbeitseffizienz sind optimiert.

Ausführungsbeispiele der Erfindung sind nachfolgend anhand der Zeichnung näher beschrieben. Es zeigen:
- Fig. 1: in einer Seitenansicht ein erfindungsgemäß ausgeführtes Sprühgerät mit Gebläseeinheit, Blasrohr und am äußeren Ende des Blasrohrs angebrachter Sprüheinrichtung;
- Fig. 2: in einer vergrößerten Perspektivdarstellung die Sprüheinrichtung nach Fig. 1 mit Einzelheiten zur geometrischen Anordnung zweier nebeneinander liegender Luftdüsen und einer im strömungsfreien Raum dazwischen angeordneten Sprühmitteldüse;
- Fig. 3: in einer schematischen Seitenansicht die Sprüheinrichtung nach Fig. 2 mit Einzelheiten zu ihrer geometrischen Ausgestaltung, der Luftführung und den Bewegungspfaden des zu Tröpfchen zerstäubten Sprühmittels;
- Fig. 4: in einer Draufsicht die Anordnung nach Fig. 3 mit zwei seitlichen Luftvorhängen und einem dazwischen liegenden Sprühmittelfächer;
- Fig. 5: in einer Längsschnittdarstellung die Sprüheinrichtung nach Fig. 2 mit weiteren Einzelheiten zu ihrer geometrischen Ausgestaltung und des sich daraus ergebenden Strömungsbildes;
- Fig. 6: in einer Diagrammdarstellung die Verteilung der Strömungsgeschwindigkeit bei einem Strömungsbild nach Fig. 5;
- Fig. 7: in einer Stirnansicht die Sprüheinrichtung nach Fig. 2 mit weiteren Einzelheiten zur Ausgestaltung der Luftdüsen und der Sprühmitteldüse;
- Fig. 8: in einer Seitenansicht eine Variante des Sprühgerätes nach Fig. 1 mit einem verzweigten Blasrohr, an dem seitlich mehrere Sprüheinrichtungen angeordnet sind;
- Fig. 9: in einer Heckansicht eine weitere Variante des Sprühgerätes nach Fig. 1 mit einem aufrecht stehenden Blasrohr, an dem seitlich mehrere Sprüheinrichtungen angeordnet sind.

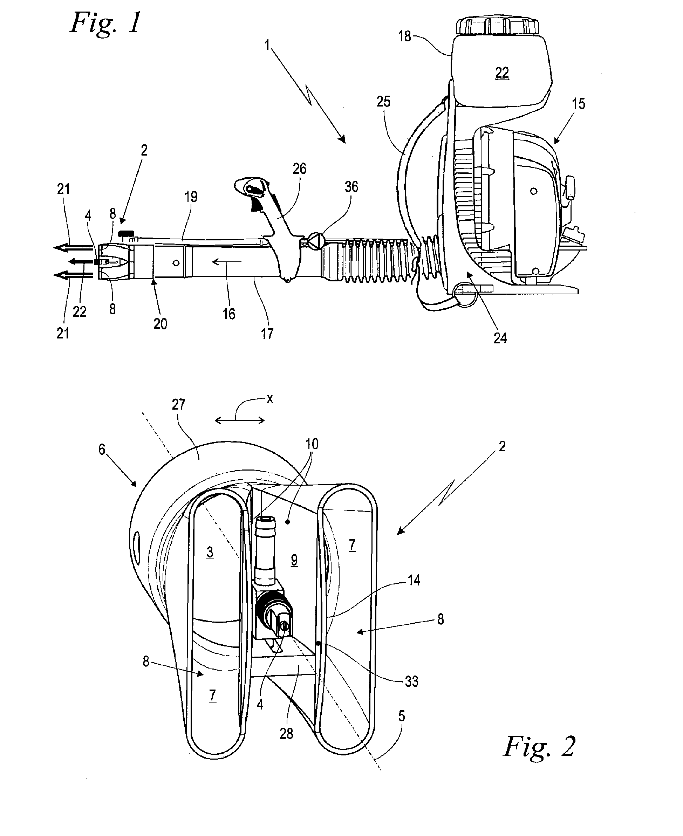

Fig. 1 zeigt in einer Seitenansicht ein erfindungsgemäß ausgeführtes Sprühgerät. Das Sprühgerät umfasst ein handgeführtes Blasgerät 1 mit einer motorisch angetriebenen Gebläseeinheit 15 zur Erzeugung eines Blasluftstroms 16. Zum Antrieb der Gebläseeinheit 15 ist ein nicht näher dargestellter, insbesondere einzylindriger Verbrennungsmotor vorgesehen. Es kann aber auch ein Elektromotor für den Netz- oder Akkubetrieb zweckmäßig sein. Teil des Blasgerätes 1 ist ein mit der Gebläseeinheit 15 strömungsleitend verbundenes Blasrohr 17, welches den von der Gebläseeinheit 15 erzeugten Blasluftstrom 16 bis zu einem ausgangsseitigen Ende 20 führt.

Am Blasgerät 1 ist oberhalb der Gebläseeinheit 15 ein Sprühmittelbehälter 18 angebracht, in dem ein flüssiges Sprühmittel 22 beispielsweise in Form eines Pflanzenschutzmittels bevorratet wird. Vom Sprühmittelbehälter 18 geht eine Sprühmittelleitung 19 aus, die entlang des Blasrohres 17 zu dessen der Gebläseeinheit gegenüberliegendem Ende mit einem Ausgang 20 des Blasrohres 17 geführt ist. Eine schematisch angedeutete Druckpumpe 36 fördert das Sprühmittel 22 unter Druck durch die Sprühmittelleitung 19. Die Druckpumpe 36 ist hier beispielhaft in der Sprühmittelleitung 19 am Blasrohr 17 dargestellt, kann aber auch an anderer Stelle beispielsweise im Bereich der Gebläseeinheit 15 angeordnet sein. Außerdem kann eine Ausführung zweckmäßig sein, bei der der Sprühmittelbehälter 18 mittels der Druckpumpe 36 unter Druck gesetzt wird, wodurch eine Druckförderung des Sprühmittels 22 erzeugt wird.

Am ausgangsseitigen Ende 20 des Blasrohres 17 ist eine erfindungsgemäß ausgeführte und weiter unten im Detail näher beschriebene Sprüheinrichtung 2 angebracht. Die Sprüheinrichtung 2 weist zwei Luftdüsen 8 und eine dazwischen liegende Sprühmitteldüse 4 auf. Die Sprühmitteldüse 4 wird mittels der Sprühmittelleitung 19 mit dem Sprühmittel 22 aus dem Sprühmittelbehälter 18 versorgt, wobei das Sprühmittel 22 im Betrieb aus der Sprühmitteldüse 4 entsprechend einem Pfeil nach Fig. 1 austritt. Der Blasluftstrom 16 wird in der Sprüheinrichtung 2 in zwei aus den beiden Luftdüsen 8 austretende, voneinander beabstandete Teilluftströme 21 aufgeteilt, zwischen denen die Sprühmitteldüse 4 mit dem austretenden Sprühmittel 22 liegt.

Das Sprühgerät ist im Bereich der Gebläseeinheit 15 und des Sprühmittelbehälters 18 mit einem Rückentragegestell 24 versehen, welches Schultergurte 25 für den Benutzer aufweist. Hiermit trägt der Benutzer im Betrieb das Sprühgerät auf dem Rücken. Am Blasrohr 17 ist ein Handgriff 26 mit Bedienelementen für das Sprühgerät befestigt. Mit dem Handgriff 26 kann der Benutzer das flexibel mit der Gebläseeinheit 15 verbundene Blasrohr 17 und infolge dessen die austretenden Teilluftströme 21 mit dem Sprühmittel 22 im Sinne eines handgeführten Sprühgerätes von Hand führen und zum Zielort lenken. Anstelle des hier gezeigten rückengetragenen und handgeführten Sprühgerätes kann auch ein von Hand getragenes Sprühgerät vorgesehen sein.

Das gezeigte handgeführte Sprühgerät ist für das Ausbringen bzw. Versprühen von flüssigen Pflanzenschutzmitteln im Obst-, Wein- und Gemüseanbau, im Wald und in Baumschulen vorgesehen, kann aber auch für andere Einsatzzwecke zweckmäßig sein.

Fig. 2 zeigt in perspektivischer Ansicht die Sprüheinrichtung 2 nach Fig. 1 von der Seite der Luftdüsen 8 aus betrachtet. Die Sprüheinrichtung 2 erstreckt sich entlang einer Längsachse 5, die im montierten Zustand achsparallel bzw. koaxial zur Längsachse des Blasrohres 17 nach Fig. 1 liegt, und die dadurch die Sprührichtung vorgibt. In Richtung der Längsachse 5 den beiden Luftdüsen 8 gegenüberliegend ist die Sprüheinrichtung 2 mit einem etwa zylindrischen Kragen 27 versehen, mittels dessen die Sprüheinrichtung 2 im montierten Zustand auf den Ausgang 20 des Blasrohres 17 (Fig. 1) aufgesteckt und befestigt ist. Der kreisrunde Querschnitt des Kragens 27 und des Ausganges 20 vom Blasrohr 17 (Fig. 1) lassen aber eine freie Verdrehbarkeit der Sprüheinrichtung 2 gegenüber dem Blasrohr 17 zu. Aus der Zusammenschau der Fig. 1 und 2 ergibt sich, dass je nach Wahl des Benutzers und anstehender Sprühaufgabe bezogen auf die in Fig. 1 dargestellte gewöhnliche Arbeitshaltung die beiden Luftdüsen 8 übereinander, entsprechend der Darstellung nach Fig. 2 nebeneinander, oder in einem beliebigen Zwischendrehwinkel angeordnet und fixiert werden können. Unabhängig von der gewählten Drehwinkellage der Spüleinrichtung 2 gegenüber dem Blasrohr 17 ist aber eine Seitenrichtung x durch die Abstandsrichtung der beiden Luftdüsen 8 zueinander vorgegeben.

Innerhalb der Sprüheinrichtung 2 ist eine Luftkanalanordnung 3 zur Führung und Formung des Blasluftstromes 16 (Fig. 1) ausgebildet. Die Luftkanalanordnung 3 umfasst einen Eingangskanalabschnitt 6 sowie zwei Ausgangskanalabschnitte 7 und ist derart gestaltet, dass der direkt mit dem Ende 20 des Blasrohres 17 verbundene Eingangskanalabschnitt 6 Y-förmig in die zwei in Strömungsrichtung nachfolgenden Ausgangskanalabschnitte 7 verzweigt ist. Die beiden Ausgangskanalabschnitte 7 münden in je einer ihnen zugeordneten Luftdüse 8.

Zwei einander zugewandte Innenwände 10 der beiden Ausgangskanalabschnitte 7 sind mittels eines Verbindungssteges 28 miteinander verbunden. Zwischen ihnen ist auch die Sprühmitteldüse 4 angeordnet und auf dem Verbindungssteg 28 montiert. Im gezeigten Ausführungsbeispiel ist für die Montage der Sprühmitteldüse 4 ein Langloch vorgesehen, so dass die Sprühmitteldüse 4 je nach Bedarf in Richtung der Längsachse 5 verschoben und in der gewünschten Position fixiert werden kann. In jedem Falle bildet sich aber im Bereich zwischen den beiden Luftdüsen 8 im Betrieb ein zumindest näherungsweise luftströmungsfreier Raum 9 aus, in dem die Sprühmitteldüse 4 positioniert ist. Der luftströmungsfreie Raum 9 bedeutet im Sinne der Erfindung einen Raum, der nicht von den beiden gerichtet austretenden Teilluftströmen 21 (Fig. 1) direkt beaufschlagt ist und deshalb im Vergleich zu den gerichteten Teilluftströmen 21 eine allenfalls geringe Luftbewegung erfährt.

Im Ausführungsbeispiel nach Fig. 2 sind die beiden Innenwände 10 noch im Bereich der jeweiligen Luftdüse 8 mit in Ausströmrichtung nach vorne hervorstehenden Schutzkragen 33 versehen, die Innenkanten 14 der Luftdüsen 8 bilden. Die Sprühmitteldüse 4 ist nach Fig. 2 gegenüber den beiden Schutzkragen 33 und die durch sie gebildeten Innenkanten 14 zurückversetzt angeordnet und dadurch gegen Stöße oder dergleichen von vorne und auch in der Seitenrichtung x geschützt. Es kann aber auch zweckmäßig sein, die Ausgangsseite der Sprühmitteldüse 4 in Strömungsrichtung nach vorne zumindest in begrenztem Maße über die Innenkanten 14 der Luftdüsen 8 hervorstehen zu lassen.

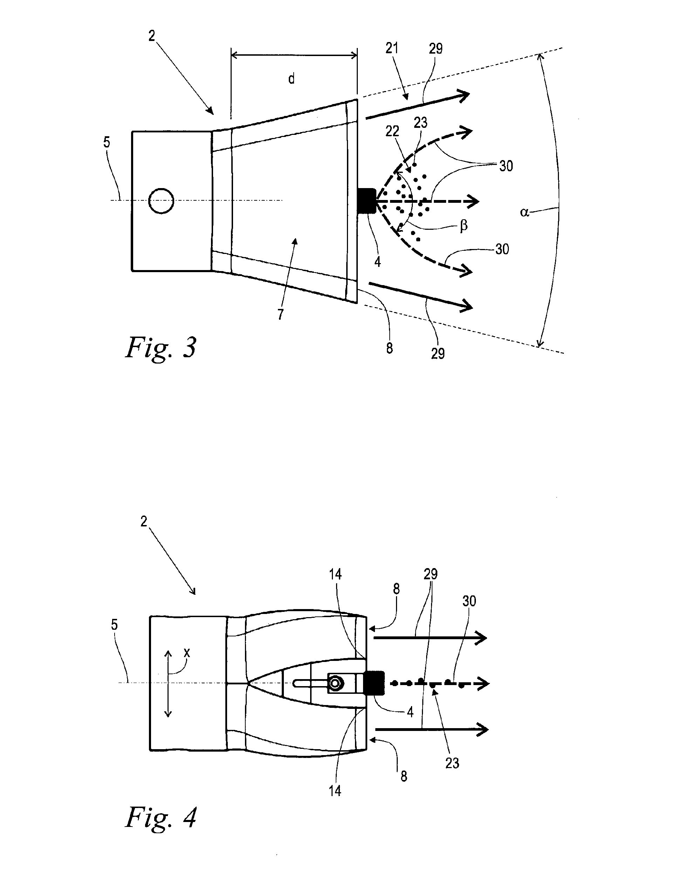

Fig. 3 zeigt in einer schematischen Seitenansicht die Sprüheinrichtung 2 nach Fig. 2, wobei hier der besseren Übersicht halber die Schutzkragen 33 nach Fig. 2 nicht dargestellt sind oder wegfallen können. Die Ausgangskanalabschnitte 7 erstrecken sich über eine Düsenlänge d, die vorteilhaft in einem Bereich von einschl. 50 mm bis einschl. 200 mm liegt und im gezeigten Ausführungsbeispiel etwa 100 mm beträgt. Entlang der Düsenlänge d werden die Ausgangskanalabschnitte 7 in Ausblasrichtung höher, in dessen Folge die beiden Luftdüsen 8 als Fächerdüsen mit einem Öffnungswinkel α ausgebildet sind. Der Öffnungswinkel α liegt vorteilhaft in einem Bereich von einschl. 10° bis einschl. 45° und beträgt im gezeigten Ausführungsbeispiel etwa 30°. Dem Öffnungswinkel α folgend treten die beiden Teilluftströme 21 entsprechend Pfeilen 29 fächerförmig aus den ihnen zugeordneten Luftdüsen 8 aus.

Das Sprühmittel 22 wird beim Austritt aus der Sprühmitteldüse 4 zu feinen Tröpfchen 23 zerstäubt. Hierzu ist die Sprühmitteldüse 4 bevorzugt als Injektordüse ausgeführt, innerhalb derer Luft angesaugt und mit dem Sprühmittel 22 vermischt wird, was die Zerstäubung fördert. Es können aber auch andere Bauformen der Sprühmitteldüse 4 zweckmäßig sein. In jedem Falle erfolgt die Zerstäubung innerhalb des luftströmungsfreien Raums 9 ohne Einwirkung der Teilluftströme 21. In der gezeigten vorteilhaften Ausführungsform ist auch die Sprühmitteldüse 4 als Fächerdüse ausgebildet, aus der das Sprühmittel 22 in einem Fächerwinkel β austritt. Der Fächerwinkel β liegt bevorzugt in einem Bereich von einschl. 70° bis einschl. 120° und beträgt im gezeigten Ausführungsbeispiel etwa 90°. Vom Ausgang der Sprühmitteldüse 4 bewegen sich die zerstäubten Tröpfchen 23 entlang Pfeilen 30 von der Sprüheinrichtung 2 fort zum Ziel hin.

Fig. 4 zeigt in einer schematischen Draufsicht die Sprüheinrichtung 2 nach Fig. 3, demnach die beiden Luftdüsen 8 in der Seitenrichtung x nebeneinander angeordnet sind. In dieser die Seitenrichtung x zeigenden Draufsicht findet bedingt durch die Ausgestaltung der Luftdüsen 8 und der Sprühmitteldüse 4 jeweils als Fächerdüse bei den beiden Teilluftströmen 21 und auch bei den Tröpfchen 23 entsprechend den Pfeilen 29, 30 keine besonders ausgeprägte Auffächerung in der Seitenrichtung x statt. Vielmehr ist aus der Zusammenschau der Fig. 3 und 4 erkennbar, dass im Nahbereich stromab der Luftdüsen 8 und der Sprühmitteldüse 4 die beiden Teilluftströme 21 entsprechend den Pfeilen 29 die Gestalt von zwei zueinander beabstandeten Luftvorhängen einnehmen, zwischen denen sich fächerförmig die Tröpfchen 23 entsprechend den Pfeilen 30 zum Ziel hin bewegen. Die beiden Teilluftströme 21 üben dabei eine sanfte Beschleunigungs- und Transportwirkung auf die Tröpfchen 23 aus, so dass ihr anfänglicher Fächerwinkel β entsprechend der Darstellung nach Fig. 3 und der dort gezeigten gekrümmten Pfeile 30 mit zunehmendem Transportweg geringer wird.

Sprühmitteldruck und Düsengeometrie der Sprühmitteldüse 4 sind derart aufeinander abgestimmt, dass ein bestimmtes Durchmesserspektrum der Tröpfchen 23 erreicht wird. Je nach Aufgabenstellung erfolgt die Abstimmung derart, dass sich ein Durchmesserspektrum von insbesondere 150 µm bis 550 µm Dv0,5 und vorzugsweise von 250 µm bis 350 µm Dv0,5 zur Erzielung der BCPC-Klasse "mittel" einstellt. Alternativ kann eine Einstellung eines Tropfendurchmesserspektrums von 350 µm bis 400 µm Dv0,5 zur Erzielung der BCPC-Klasse "grob" zweckmäßig sein. Hierzu wird vorteilhaft ein Druckbereich des Sprühmittels 22 von einschl. 2 bar bis einschl. 15 bar und vorzugsweise von 5 bar gewählt und mittels der Druckpumpe 36 (Fig. 1) erzeugt, einhergehend mit einem Volumenstrom des Sprühmittels 22 in einem zweckmäßigen Bereich von einschl. 0,051/min bis einschl. 3,51/min, und vorzugsweise von 1,81/min. Die Geschwindigkeit der Tröpfchen 23 beim Austritt aus der Sprühmitteldüse 4 liegt bevorzugt in einem Bereich von einschl. 2 m/s bis einschl. 40 m/s und beträgt insbesondere etwa 10 m/s.

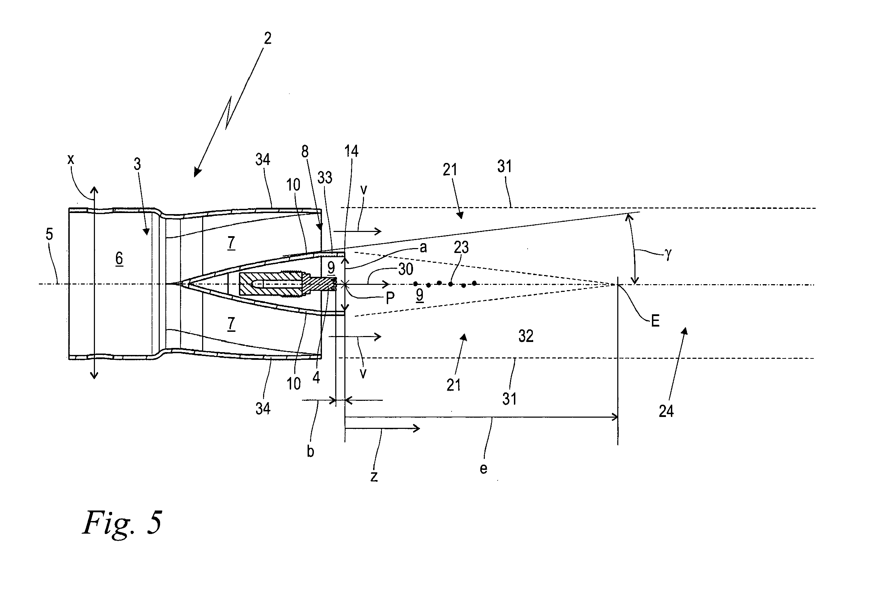

Fig. 5 zeigt in einer die Seitenrichtung x darstellenden Längsschnittdarstellung die Sprüheinrichtung 2 nach Fig. 2 mit dem sich im Betrieb einstellenden Strömungsbild. Deutlich erkennbar ist die in der Sprüheinrichtung 2 ausgebildete Y-förmig verzweigte Luftkanalanordnung 3 mit dem zentralen Eingangskanalabschnitt 6, von dem die beiden Ausgangskanalabschnitte 7 in Ausgangsrichtung zu den beiden zugeordneten Luftdüsen 8 hin abzweigen. Die beiden den jeweiligen Ausgangskanalabschnitt 7 nach innen zur Längsachse 5 hin begrenzenden Innenwände 10 haben einen gekrümmten Verlauf und sind im Austrittsbereich der jeweiligen Luftdüse 8 in einem Wandwinkel γ zur Längsachse 5 angeordnet. Sofern die jeweilige Innenwand 10 in Strömungsrichtung zur Längsachse 5 hin geneigt ist, ist hierdurch im Sinne einer Vorzeichendefinition ein positiver Betrag des Wandwinkels γ gebildet. Der Wandwinkel γ liegt bevorzugt in einem Bereich von ≤ 20° bis ≥-10°, und beträgt insbesondere etwa 0°, wie dies für die beiden Schutzkragen 33 insgesamt bis hin zu ihren Innenkanten 14 gilt. Eingangsseitig davon, etwa in der gemeinsamen Ebene der Luftdüsen 8 liegend ist ein zeichnerisch dargestellter Wandwinkel γ vorgesehen, der einen negativen Betrag innerhalb der vorgenannten Grenzen aufweist.

Des Weiteren ist in Fig. 5 erkennbar, dass die beiden Innenkanten 14 in der Seitenrichtung x in einem Abstand a zueinander liegen. Eine in Richtung dieses Abstandes a bzw. in der Seitenrichtung x verlaufende Verbindungslinie zwischen den beiden Innenkanten 14 bildet gemeinsam mit der Längsachse 5 einen Kreuzungspunkt P. Die Sprühmitteldüse 4 weist eine Ausgangsseite auf, die in Richtung der Längsachse 5 um ein Versatzmaß b gegenüber dem Kreuzungspunkt P verschoben sein kann und im gezeigten Ausführungsbeispiel tatsächlich auch verschoben ist. Als Vorzeichenregel ist hierfür definiert, dass eine in Ausblasrichtung über dem Kreuzungspunkt p hervorstehende Ausgangsseite der Sprühmitteldüse 4 zu einem positiven Versatzmaß b führt. Das Versatzmaß b ist bevorzugt ≤ dem Abstand a und weist insbesondere einen negativen Betrag auf. Der Fall eines Versatzmaßes b mit negativem Betrag ist in Fig. 5 dargestellt, demnach die Ausgangsseite der Sprühmitteldüse 4 gegenüber dem Kreuzungspunkt P entgegen der Ausströmrichtung zurückgezogen liegt. Dem gegenüber zeigen die Fig. 3 und 4 eine schematisch dargestellte Ausführung mit fehlendem Schutzkragen 33, wobei die Ausgangsseite der Sprühmitteldüse 4 gegenüber den Innenkanten 14 in Ausströmrichtung hervorsteht. Dieser Fall führt anlog zur Darstellung nach Fig. 5 zu einem positiven Versatzmaß b, für welches aber vorteilhaft die vorgenannten Grenzen gelten.

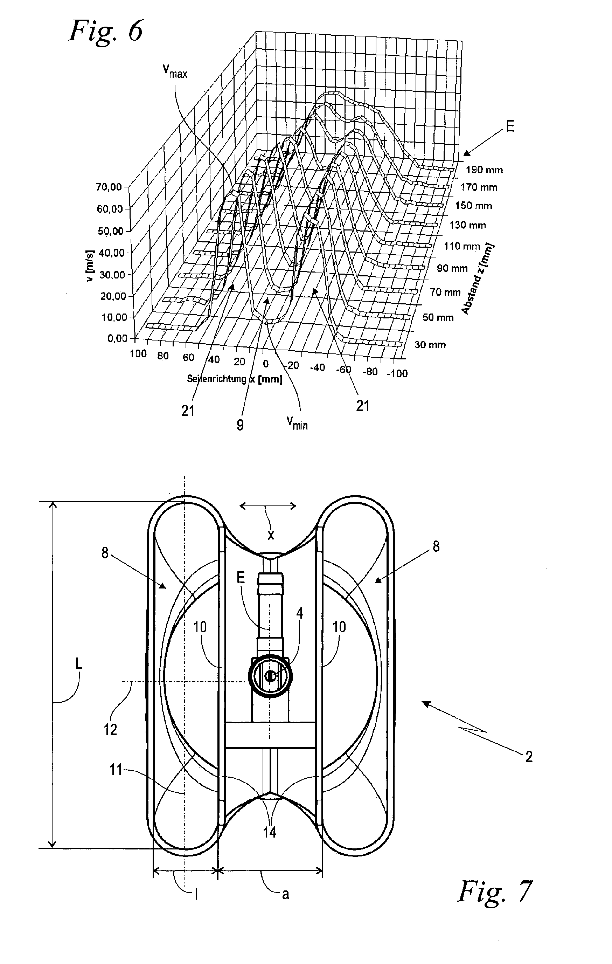

Fig. 5 zeigt noch das Strömungsbild, welches sich infolge der geometrischen Ausgestaltung der Sprüheinrichtung 2 und eines erfindungsgemäßen Betriebsverfahrens mit entsprechend gewählten Betriebsparametern einstellt. Die beiden Teilluftströme 21 treten aus den beiden Luftdüsen 8 etwa parallel zueinander und parallel zur Längsachse 5 mit einer Luftströmungsgeschwindigkeit v aus. Die Luftströmungsgeschwindigkeit v liegt vorteilhaft in einem Bereich von einschl. 30 m/s bis einschl. 120 m/s und beträgt insbesondere etwa 70 m/s beim Austritt aus den Luftdüsen 8. In dem die Seitenrichtung x darstellenden Querschnitt nach Fig. 5 sind die Innenwände 10 mit ihrem Wandwinkel γ und auch Außenwände 34 der Ausgangskanalabschnitte 7 im Bereich der Luftdüsen 8 derart geformt, dass die beiden ausgetretenen Teilluftströme 21 nach innen zur Längsachse 5 hin durch innere Flächen 32 und nach außen von der Längsachse 5 fortweisend durch äußere Flächen 31 begrenzt sind, wobei die äußeren Flächen 31 etwa parallel zur Längsachse 5 verlaufen, während die inneren Flächen 32 in Strömungsrichtung aufeinander zulaufen und sich in einem Einkoppelpunkt E treffen. Mit größer werdendem Abstand z zu den Luftdüsen 8 weiten sich beide Teilluftströme 21 also entlang eines von den Luftdüsen 8 ausgehenden Einkoppelweges e in der Seitenrichtung x langsam auf, bis sie am Ende des Einkoppelweges e im Einkoppelpunkt E aufeinandertreffen und sich vereinigen. Stromab des Einkoppelpunktes E, also in einem Abstand z zu den Luftdüsen 8, der größer ist als der Einkoppelweg e, stellt sich bezogen auf die Seitenrichtung x ein zumindest näherungsweise homogener Luftströmungsquerschnitt ein, wie er in Fig. 6 dargestellt und weiter unten näher beschrieben ist. Die geometrische Ausgestaltung der Sprüheinrichtung 2 und die Betriebsparameter des Sprühgerätes insgesamt sind derart aufeinander abgestimmt, dass der Einkoppelweg e vorteilhaft in einem Bereich von einschl. 50 mm bis einschl. 500 mm liegt und insbesondere etwa 200 mm beträgt.

Zwischen den beiden Teilluftströmen 21 erstreckt sich der nahezu luftströmungsfreie Raum 9. Das zu Tröpfchen 23 zerstäubte Sprühmittel 22 tritt mit einer im Zusammenhang mit den Fig. 3 und 4 beschriebenen Geschwindigkeit aus der Sprühmitteldüse 4 aus und bewegt sich entsprechend dem Pfeil 30 in der gezeigten Draufsicht entlang der Längsachse 5 von der Sprüheinrichtung 2 fort zum Ziel hin. Dabei werden die Tröpfchen 23 im zumindest näherungsweise luftströmungsfreien Raum 9 zwischen den beiden Teilluftströmen 21 durch die seitliche Einwirkung der beiden Teilluftströme 21 - wie im Zusammenhang mit den Fig. 3 und 4 beschrieben - bis zum Erreichen des Einkoppelpunktes E beschleunigt. Die vorstehend beschriebenen Betriebsparameter sind dabei derart aufeinander abgestimmt, dass am Ort bzw. beim Erreichen des Einkoppelpunktes E eine Geschwindigkeitsdifferenz zwischen den beiden Teilluftströmen 21 und den Tröpfchen 23 gegeben ist, die < 10 m/s ist, und die zu einer Weber-Zahl We < 12 führt. Stromab des Einkoppelpunktes E sind die beiden Teilluftströme 21 und die Tröpfchen 23 zu einem Gesamtluftstrom mit mitgeführten Tröpfchen 23 in Form eines Gemisches 24 vereinigt, dessen Gemischgeschwindigkeit vorzugsweise in einem Bereich von einschl. 10 m/s bis einschl. 80 m/s liegt und insbesondere etwa 40 m/s beträgt.

Fig. 6 zeigt in einer Diagrammdarstellung eine beispielhafte Geschwindigkeitsverteilung der Luftströmungsgeschwindigkeit v aufgetragen über der Seitenrichtung x und dem Abstand z entsprechend dem schematischen Strömungsprofil nach Fig. 5. Aus der Zusammenschau der Fig. 5 und 6 ist erkennbar, dass die beiden Teilluftströme 21 bei einem Abstand z zu den jeweiligen Luftdüsen 8 Geschwindigkeiten v mit einer maximalen Geschwindigkeit vₘₐₓ aufweisen, die in dem zuvor definierten Bereich liegt, während sich dazwischen ein nahezu luftströmungsfreier Raum 9 mit einer minimalen Geschwindigkeit vₘᵢₙ ausgebildet hat. Als "nahezu luftströmungsfrei" werden im Sinne der Erfindung Geschwindigkeiten v im nahezu luftströmungsfreien Raum 9 angesehen, die ≤ 25 % der maximalen Luftströmungsgeschwindigkeit vₘₐₓ der beiden Teilluftströme 21 bei gleichem Abstand z betragen und insbesondere um mindestens eine Größenordnung, also mindestens eine Zehnerpotenz verringert sind. Weiter ist erkennbar, dass die minimale Luftströmungsgeschwindigkeit vₘᵢₙ zwischen den beiden Teilluftströmen 21 im nahezu luftströmungsfreien Raum 9 mit zunehmendem Abstand z zunächst kaum und erst nahe dem Einkoppelpunkt E signifikant ansteigt. Erst stromab des Einkoppelpunktes E, also bei einem Abstand z, der größer ist als der Einkoppelweg e, stellt sich bezogen auf die Seitenrichtung x ein zumindest näherungsweise homogener Luftströmungsquerschnitt dergestalt ein, dass in der Seitenrichtung x die Ausbildung von zwei den beiden Teilluftströmen 21 zuzuordnenden Maximalgeschwindigkeiten vₘₐₓ und einer dazwischen liegenden Minimalgeschwindigkeit vₘᵢₙ unterbleibt.

Fig. 7 zeigt noch in einer Stirnansicht die Sprüheinrichtung 2 nach Fig. 2 mit weiteren Einzelheiten zur Ausgestaltung der Luftdüsen 8 und der Sprühmitteldüse 4. Es ist zu erkennen, dass die Luftdüsen 8 als Flachdüsen mit je einer langen Querschnittsachse 11 und je einer kurzen Querschnittsachse 12 ausgebildet sind. Die beiden langen Querschnittsachsen 11 liegen vorteilhaft zumindest näherungsweise parallel zueinander und bezogen auf die Seitenrichtung x nebeneinander. Aus der Zusammenschau der Fig. 3, 4 und 7 ist noch ersichtlich, dass die Sprühmitteldüse 4 als Fächerdüse mit einer Fächerebene E ausgebildet ist, innerhalb derer sich die Tröpfchen 23 entlang der Pfeile 30 bewegen. Die Fächerebene E liegt senkrecht zur seitlichen Abstandsrichtung zwischen den beiden Luftdüsen 8 bzw. senkrecht zur Seitenrichtung x. Bezogen auf die Seitenrichtung x und die senkrecht dazu stehende Hochrichtung sind die beiden Luftdüsen 8 und die mittig dazwischen liegende Sprühmitteldüse 4 spiegelsymmetrisch ausgeführt.

Die lange Querschnittsachse 11 einer jeden Luftdüse 8 weist eine Länge L auf, während die kurze Querschnittsachse 12 eine Länge 1 aufweist. Das Verhältnis der Länge L der langen Querschnittsachse 11 zur Länge 1 der zugeordneten kurzen Querschnittsachse 12 liegt vorteilhaft in einem Bereich von einschließlich 3,0 bis 10,0, bevorzugt in einem Bereich von einschließlich 4,0 bis einschließlich 7,0, und beträgt im gezeigten Ausführungsbeispiel 5,4.

Die Länge L der langen Querschnittsachse 11 liegt vorteilhaft in einem Bereich von einschl. 50 mm bis einschl. 250 mm und beträgt im gezeigten Ausführungsbeispiel 135 mm. Die Länge 1 der kurzen Querschnittsachse 12 liegt bevorzugt in einem Bereich von einschl. 10 mm bis einschl. 75 mm und beträgt im gezeigten Ausführungsbeispiel 25 mm. Der Abstand a zwischen den beiden Innenkanten 14 liegt vorteilhaft in einem Bereich von einschl. 10 mm bis einschl. 80 mm und beträgt im gezeigten Ausführungsbeispiel 30 mm. Die Gesamtbreite der Sprüheinrichtung 2 in der Seitenrichtung x liegt vorteilhaft in einem Bereich von einschl. 50 mm bis einschl. 150 mm und beträgt im gezeigten Ausführungsbeispiel 80 mm.

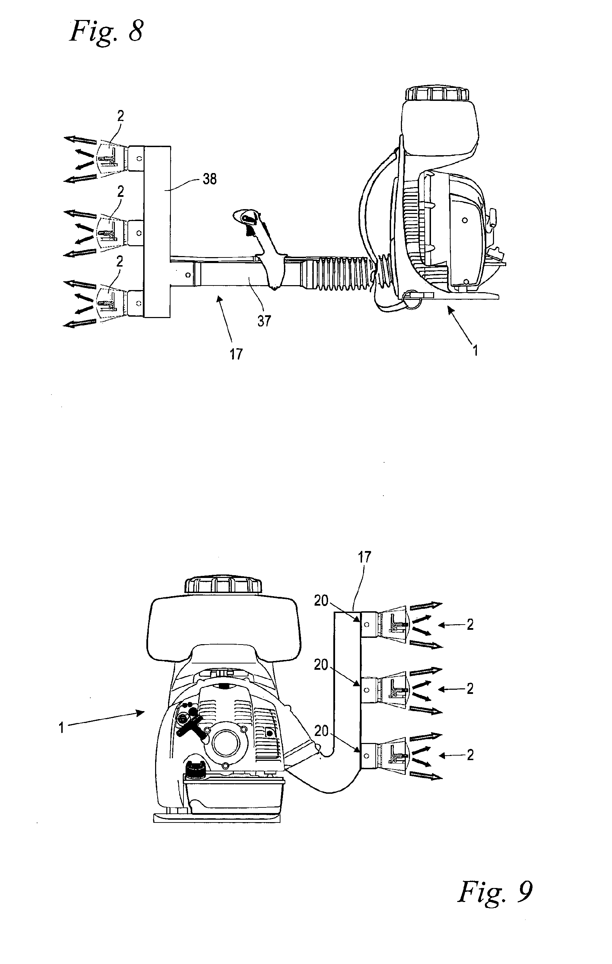

Fig. 8 zeigt in einer Seitenansicht eine Variante des Sprühgerätes nach Fig. 1, wobei das Blasgerät 1 mit Ausnahme des Blasrohres 17 und der Anordnung der Sprüheinrichtungen 2 identisch dem Blasgerät 1 nach Fig. 1 entspricht. Das Blasrohr 17 umfasst einen ersten Blasrohrabschnitt 37 identisch zum gesamten Blasrohr 17 nach Fig. 1 sowie einen zweiten, auf das freie Ende des ersten Blasrohrabschnittes 37 aufgesteckten zweiten Blasrohrabschnitt 38. Der zweite Blasrohrabschnitt 38 ist T-förmig verzweigt und erstreckt sich im Wesentlichen quer bzw. senkrecht zur Längsachse des ersten Blasrohrabschnittes 37. Der zweite Blasrohrabschnitt 38 des Blasrohres 17 weist seitlich mindestens einen und insbesondere mehrere, hier beispielhaft drei Ausgänge 20 auf, die in gleichen Abständen zueinander auf der gleichen Seite des zweiten Blasrohrabschnittes 38 entlang einer geraden Linie angeordnet sind. An jedem der Ausgänge 20 ist je eine Sprüheinrichtung 2 nach den Fig. 2 bis 7 angeordnet und montiert bzw. befestigt, wodurch im Betrieb eine im Vergleich zu Fig. 1 größere Zielfläche in einem Arbeitsgang erreicht werden kann.

Fig. 9 zeigt in einer Heckansicht eine weitere Variante des Sprühgerätes nach Fig. 1, wobei das Blasrohr 17 abweichend von der Ausführung nach Fig. 8 nicht verzweigt und auch nicht in einen ersten Blasrohrabschnitt 37 und einen zweiten Blasrohrabschnitt 38 aufgeteilt ist. Entsprechend dem zweiten Blasrohrabschnitt 38 nach Fig. 8 weist das Blasrohr 17 hier aber seitlich mindestens einen und insbesondere mehrere, hier beispielhaft drei Ausgänge 20 auf, die in gleichen Abständen zueinander auf der gleichen Seite des Blasrohres 17 entlang einer geraden Linie angeordnet sind. An jedem der Ausgänge 20 ist je eine Sprüheinrichtung 2 nach den Fig. 2 bis 7 angeordnet und montiert bzw. befestigt, wodurch auch in diesem Ausführungsbeispiel im Betrieb eine im Vergleich zu Fig. 1 größere Zielfläche in einem Arbeitsgang erreicht werden kann.

## Patentansprüche

1. Sprüheinrichtung (2) für ein handgeführtes Blasgerät (1), umfassend eine Luftkanalanordnung (3) und eine Sprühmitteldüse (4), wobei sich die Luftkanalanordnung (3) entlang einer die Sprührichtung vorgebenden Längsachse (5) erstreckt, wobei die Luftkanalanordnung (3) zwei Ausgangskanalabschnitte (7) umfasst, die in zwei bezogen auf die Längsachse (5) in einer Seitenrichtung (x) nebeneinander angeordnete Luftdüsen (8) derart münden, dass im Betrieb zwischen den beiden Luftdüsen (8) ein zumindest näherungsweise luftströmungsfreier Raum (9) gebildet ist, **dadurch gekennzeichnet, dass** die Sprühmitteldüse (4) im luftströmungsfreien Raum (9) positioniert ist.

2. Sprüheinrichtung nach Anspruch 1,
**dadurch gekennzeichnet, dass** die beiden Luftdüsen (8) jeweils einander zugewandte Innenwände (10) aufweisen, und dass die beiden Innenwände (10) im Austrittsbereich der jeweiligen Luftdüse (8) in einem Wandwinkel (γ) zur Längsachse (5) liegen, wobei der Betrag des Wandwinkels (γ) bei einer Neigung der Innenwand (10) zur Längsachse (5) hin positiv definiert ist, und wobei der Wandwinkel (γ) in einem Bereich von einschließlich ≤ 20° bis einschließlich ≥ -10° liegt und insbesondere zumindest näherungsweise 0° beträgt.

3. Sprüheinrichtung nach Anspruch 1 oder 2,
**dadurch gekennzeichnet, dass** die Luftdüsen (8) als Flachdüsen mit je einer langen Querschnittsachse (11) und je einer kurzen Querschnittsachse (12) ausgebildet sind, wobei die beiden langen Querschnittsachsen (11) zumindest näherungsweise parallel zueinander liegen.

4. Sprüheinrichtung nach Anspruch 3,
**dadurch gekennzeichnet, dass** das Verhältnis einer Länge (L) der langen Querschnittsachse (11) zu einer Länge (1) der zugeordneten kurzen Querschnittsachse (12) in einem Bereich von einschließlich 3,0 bis einschließlich 10,0, bevorzugt in einem Bereich von einschließlich 4,0 bis einschließlich 7,0 liegt, und insbesondere etwa 5,4 beträgt.

5. Sprüheinrichtung nach einem der Ansprüche 1 bis 4,
**dadurch gekennzeichnet, dass** die beiden Luftdüsen (8) einander zugewandte Innenkanten (14) mit einem seitlichen Abstand (a) zueinander aufweisen, wobei der Abstand (a) in einem Bereich von einschließlich 10 mm bis einschließlich 80 mm, bevorzugt in einem Bereich von einschließlich 20 mm bis einschließlich 50 mm liegt, und insbesondere etwa 30 mm beträgt.

6. Sprüheinrichtung nach einem der Ansprüche 1 bis 5,
**dadurch gekennzeichnet, dass** eine den Abstand (a) vorgebende Verbindungslinie der beiden Innenkanten (14) und die Längsachse (5) einen Kreuzungspunkt (P) bilden, wobei eine Ausgangsseite der Sprühmitteldüse (4) in Richtung der Längsachse (5) um ein Versatzmaß (b) gegenüber dem Kreuzungspunkt (P) verschoben ist, wobei der Betrag des Versatzmaßes (b) in Ausblasrichtung positiv definiert ist, und wobei das Versatzmaß (b) bevorzugt ≤ dem Abstand (a) ist und insbesondere einen negativen Betrag aufweist.

7. Sprüheinrichtung nach einem der Ansprüche 1 bis 6,
**dadurch gekennzeichnet, dass** die beiden Luftdüsen (8) als Fächerdüsen mit einem Öffnungswinkel (α) ausgebildet sind, wobei der Öffnungswinkel (α) in einem Bereich von einschließlich 10° bis einschließlich 45° liegt und insbesondere etwa 30° beträgt.

8. Sprüheinrichtung nach einem der Ansprüche 1 bis 7,
**dadurch gekennzeichnet, dass** die Sprühmitteldüse (4) als Fächerdüse mit einer Fächerebene (E) ausgebildet ist, wobei die Fächerebene (E) senkrecht zur seitlichen Abstandsrichtung zwischen den beiden Luftdüsen (8) liegt.

9. Sprüheinrichtung nach Anspruch 8,
**dadurch gekennzeichnet, dass** die als Fächerdüse ausgebildete Sprühmitteldüse (4) einen Fächerwinkel (β) aufweist, wobei der Fächerwinkel (β) in einem Bereich von einschließlich 70° bis einschließlich 120° liegt und insbesondere etwa 90° beträgt.

10. Sprüheinrichtung nach einem der Ansprüche 1 bis 9,
**dadurch gekennzeichnet, dass** die Luftkanalanordnung (3) durch einen Y-förmig verzweigten Luftkanal mit einem Eingangskanalabschnitt (6) und zwei Ausgangskanalabschnitten (7) gebildet ist.

11. Sprüheinrichtung nach einem der Ansprüche 1 bis 10,
**dadurch gekennzeichnet, dass** die Sprühmitteldüse (4) als Injektordüse ausgeführt ist.

12. Handgeführtes Sprühgerät, umfassend
- ein handgeführtes Blasgerät (1) mit einer motorisch angetriebenen Gebläseeinheit (15) zur Erzeugung eines Blasluftstromes (16) und ein den Blasluftstrom (16) führendes Blasrohr (17),
- einen am Blasgerät (1) angebrachten Sprühmittelbehälter (18) und eine vom Sprühmittelbehälter (18) zu mindestens einem Ausgang (20) des Blasrohres (17) führende Sprühmittelleitung (19), sowie
- mindestens eine an dem Ausgang (20) des Blasrohres (17) angeordnete Sprüheinrichtung (2) nach einem der Ansprüche 1 bis 11.

13. Handgeführtes Sprühgerät nach Anspruch 12,
**dadurch gekennzeichnet, dass** die Sprüheinrichtung (2) um ihre Längsachse (5) drehbar am Ausgang (20) des Blasrohres (17) befestigt ist.

14. Handgeführtes Sprühgerät nach Anspruch 12 oder 13,
**dadurch gekennzeichnet, dass** eine Druckpumpe (36) für die Druckförderung eines Sprühmittels (22) durch die Sprüheinrichtung (2) vorgesehen ist.

15. Handgeführtes Sprühgerät nach einem der Ansprüche 12 bis 14,
**dadurch gekennzeichnet, dass** das Blasrohr (17) an seinem der Gebläseeinheit (15) gegenüberliegenden Ende mindestens einen Ausgang (20) aufweist, an dem die Sprüheinrichtung (2) angeordnet ist.

16. Handgeführtes Sprühgerät nach einem der Ansprüche 12 bis 15,
**dadurch gekennzeichnet, dass** das Blasrohr (17) seitlich mindestens einen und insbesondere mehrere Ausgänge (20) aufweist, an denen je eine Sprüheinrichtung (2) angeordnet ist.

17. Verfahren zum Betrieb eines handgeführten Sprühgerätes nach einem der Ansprüche 12 bis 16, wobei der Blasluftstrom (16) in den beiden Ausgangskanalabschnitten (7) der Luftkanalanordnung (3) in zwei aus den beiden Luftdüsen (8) austretende Teilluftströme (21) aufgeteilt wird, wobei sich zwischen den beiden Teilluftströmen (21) ein zumindest näherungsweise luftströmungsfreier Raum (9) ausbildet, und wobei ein Sprühmittel (22) mittels der Sprühmitteldüse (4) im luftströmungsfreien Raum (9) zu Tröpfchen (23) zerstäubt und in den luftströmungsfreien Raum (9) eingebracht wird.

18. Verfahren nach Anspruch 17,
**dadurch gekennzeichnet, dass** die beiden Teilluftströme (21) aus den Luftdüsen (8) mit einer Luftströmungsgeschwindigkeit (v) austreten, die in einem Bereich von einschließlich 30 m/s bis einschließlich 120 m/s liegt und insbesondere etwa 70 m/s beträgt.

19. Verfahren nach Anspruch 17 oder 18,
**dadurch gekennzeichnet, dass** das zu Tröpfchen (23) zerstäubte Sprühmittel (22) mit einer Tröpfchengeschwindigkeit aus der Sprühmitteldüse (4) austritt, die in einem Bereich von einschließlich 2 m/s bis einschließlich 40 m/s liegt und insbesondere etwa 10 m/s beträgt.

20. Verfahren nach einem der Ansprüche 17 bis 19,
**dadurch gekennzeichnet, dass** das Sprühmittel (22) mittels der Druckpumpe (36) unter einem Sprühmitteldruck durch die Sprühmitteldüse (4) gefördert wird, wobei der Sprühmitteldruck in einem Bereich von einschließlich 2 bar bis einschließlich 15 bar liegt und insbesondere etwa 5 bar beträgt.

21. Verfahren nach einem der Ansprüche 17 bis 20,
**dadurch gekennzeichnet, dass** die beiden Teilluftströme (21) am Ende eines von den Luftdüsen (8) ausgehenden Einkoppelweges (e) in einem Einkoppelpunkt (E) derart aufeinandertreffen, dass sich in einem Abstand (z) zu den Luftdüsen (8), der größer ist als der Einkoppelweg (e), bezogen auf die Seitenrichtung (x) ein zumindest näherungsweise homogener Luftströmungsquerschnitt einstellt, wobei der Einkoppelweg (e) in einem Bereich von einschließlich 50 mm bis einschließlich 500 mm liegt und insbesondere etwa 200 mm beträgt.

22. Verfahren nach Anspruch 21,
**dadurch gekennzeichnet, dass** sich am Ende des Einkoppelweges (e) eine Geschwindigkeitsdifferenz zwischen den Teilluftströmen (21) und den Tröpfchen (23) einstellt, die < 10 m/s ist und insbesondere zu einer Weber-Zahl We < 12 führt.

23. Verfahren nach Anspruch 21 oder 22,
**dadurch gekennzeichnet, dass** sich stromab des Einkoppelpunktes (E) ein Gemisch (35) aus den Teilluftströmen (21) und den Tröpfchen (23) einstellt, wobei das Gemisch (35) eine Gemischgeschwindigkeit aufweist, die in einem Bereich von einschließlich 10 m/s bis einschließlich 80 m/s liegt und insbesondere etwa 40 m/s beträgt.

## Claims

1. Spray device (2) for a handheld blower (1), comprising an air channel arrangement (3) and a spray nozzle (4), wherein the air channel arrangement (3) extends along a longitudinal axis (5) defining the spray direction, wherein the air channel arrangement (3) comprises two outlet channel portions (7) which open into two air nozzles (8) arranged one beside the other in a lateral direction (x) with respect to the longitudinal axis (5) in such a way that an at least virtually air-flow-free space (9) is formed during operation between the two air nozzles (8),
**characterised in that** the spray nozzle (4) is positioned in the air-flow-free space (9).

2. Spray device according to claim 1,
**characterised in that** the two air nozzles (8) have inner walls (10) facing towards each other, and the two inner walls (10) lie in the outlet area of the respective air nozzle (8) at a wall angle (γ) to the longitudinal axis (5), wherein the wall angle (γ) is positively defined in the case of an inclination of the inner wall (10) towards the longitudinal axis (5), and wherein the wall angle (γ) lies in the range of from ≤ 20° to ≥ -10° inclusive, and in particular is at least approximately 0°.

3. Spray device according to claim 1 or 2,
**characterised in that** the air nozzles (8) are formed as flat nozzles, each with a long cross-sectional axis (11) and each with a short cross-sectional axis (12), wherein the two long cross-sectional axes (11) lie at least approximately parallel to each other.

4. Spray device according to claim 3,
**characterised in that** the ratio of a length (L) of the long cross-sectional axis (11) to a length (1) of the associated short cross-sectional axis (12) lies in the range of from 3.0 to 10.0 inclusive, preferably in the range of from 4.0 to 7.0 inclusive, and particularly preferably is approximately 5.4.

5. Spray device according to one of claims 1 to 4,
**characterised in that** the two air nozzles (8) have inner edges (14) facing towards each other at a lateral distance (a) from each other, wherein the distance (a) lies in the range of from 10 mm to 80 mm inclusive, preferably in the range of from 20 mm to 50 mm inclusive, and particularly preferably is approximately 30 mm.

6. Spray device according to one of claims 1 to 5,
**characterised in that** a connecting line, defining the distance (a), of the two inner edges (14) and the longitudinal axis (5) form an intersection point (P), wherein an outlet side of the spray nozzle (4) is moved in the direction of the longitudinal axis (5) by a level of displacement (b) with respect to the intersection point (P), wherein the amount of the level of displacement (b) is positively defined in the blowing direction, and wherein the level of displacement (b) is preferably ≤ the distance (a) and in particular is negative.

7. Spray device according to one of claims 1 to 6,
**characterised in that** the two air nozzles (8) are formed as fan nozzles with an opening angle (α), wherein the opening angle (α) lies in the range of from 10° to 45° inclusive and in particular is approximately 30°.

8. Spray device according to one of claims 1 to 7,
**characterised in that** the spray nozzle (4) is formed as a fan nozzle with a fan plane (E), wherein the fan plane (E) is perpendicular to the lateral spacing direction between the two air nozzles (8).

9. Spray device according to claim 8,
**characterised in that** the spray nozzle (4) formed as a fan nozzle has a fan angle (β), wherein the fan angle (β) is in the range of from 70° to 120° inclusive and in particular is approximately 90°.

10. Spray device according to one of claims 1 to 9,
**characterised in that** the air channel arrangement (3) is formed by an air channel branched in a Y shape with an inlet channel portion (6) and two outlet channel portions (7).

11. Spray device according to one of claims 1 to 10,
**characterised in that** the spray nozzle (4) is designed as an injector nozzle.

12. Handheld sprayer, comprising:
- a handheld blower (1) with a motorised blowing unit (15) to generate a blast air flow (16) and a blast pipe (17) conveying the blast air flow (16),
- a spray container (18) arranged on the blower (1) and a spray line (19) leading from the spray container (18) to at least one outlet (20) of the blast pipe (17), and also
- at least one spray device (2) according to one of claims 1 to 11 arranged at the outlet (20) of the blast pipe (17).

13. Handheld sprayer according to claim 12,
**characterised in that** the spray device (2) is fixed to the outlet (20) of the blast pipe (17) so that the spray device (2) is rotatable about its longitudinal axis (5).

14. Handheld sprayer according to claim 12 or 13,
**characterised in that** a pressure pump (36) is provided for the pressure conveyance of a spray (22) through the spray device (2).

15. Handheld sprayer according to one of claims 12 to 14,
**characterised in that** the blast pipe (17) has, at its end lying opposite the blowing unit (15), at least one outlet (20), on which the spray device (2) is arranged.

16. Handheld sprayer according to one of claims 12 to 15,
**characterised in that** the blast pipe (17) has laterally at least one and in particular a plurality of outlets (20), on each of which a spray device (2) is arranged.

17. Method for operating a handheld sprayer according to one of claims 12 to 16,
wherein the blast air flow (16) in the two outlet channel portions (7) of the air channel arrangement (3) is divided into two partial air flows (21) leaving the two air nozzles (8), wherein an at least virtually air-flow-free space (9) is formed between the two partial air flows (21), and wherein a spray (22) is atomised by means of the spray nozzle (4) in the air- flow-free space (9) into droplets (23) and incorporated into the air-flow-free space (9).

18. Method according to claim 17,
**characterised in that** the two partial air flows (21) leave the air nozzles (8) with an air flow speed (v) which is in the range of from 30 m/s to 120 m/s inclusive and in particular is approximately 70 m/s.

19. Method according to claim 17 or 18,
**characterised in that** the spray (22) atomised into droplets (23) leaves the spray nozzle (4) with a droplet speed lying in the range of from 2 m/s to 40 m/s inclusive and in particular being approximately 10 m/s.

20. Method according to one of claims 17 to 19,
**characterised in that** the spray (22) is conveyed through the spray nozzle (4) by means of the pressure pump (36) at a spray pressure, wherein the spray pressure lies in the range of from 2 bar to 15 bar inclusive and in particular is approximately 5 bar.

21. Method according to one of claims 17 to 20,
**characterised in that** the two partial air flows (21) meet each other at the end of an in-coupling path (e) leaving the air nozzles (8) at an in-coupling point (E) in such a way that at a distance (z) from the air nozzles (8) which is larger than the in-coupling path (e), in relation to the lateral direction (x), an at least virtually homogeneous air flow cross-section is set, wherein the in-coupling path (e) lies in the range of from 50 mm to 500 mm inclusive and is in particular approximately 200 mm.

22. Method according to claim 21,
**characterised in that** a speed difference between the partial air flows (21) and the droplets (23) is set at the end of the in-coupling path (e) which is < 10 m/s and in particular leads to a Weber number We < 12.

23. Method according to claim 21 or 22,
**characterised in that** a mixture (35) of the partial air flows (21) and the droplets (23) is set downstream of the in-coupling point (E), wherein the mixture (35) has a mixing speed lying in the range of from 10 m/s to 80 m/s inclusive and in particular being 40 m/s.

## Revendications

1. Dispositif de vaporisation (2) pour un souffleur à main (1), comprenant un dispositif formant conduit d'air (3) et un vaporisateur de produit (4), étant précisé que le dispositif formant conduit d'air (3) s'étend le long d'un axe longitudinal (5) qui prédéfinit le sens de vaporisation, et que le dispositif formant conduit d'air (3) comprend deux sections de conduit de sortie (7) qui débouchent dans deux éjecteurs d'air (8), disposés côte à côte dans un sens latéral (x) par rapport à l'axe longitudinal (5), de telle sorte qu'en fonctionnement, un espace (9) au moins approximativement sans écoulement d'air soit formé entre les deux éjecteurs d'air (8),
**caractérisé en ce que** le vaporisateur de produit (4) est placé dans ledit espace sans écoulement d'air (9).

2. Dispositif de vaporisation selon la revendication 1,
**caractérisé en ce que** les deux éjecteurs d'air (8) comportent chacun des parois intérieures (10) tournées l'une vers l'autre, et **en ce que** les deux parois intérieures (10) définissent par rapport à l'axe longitudinal (5) un angle de paroi (γ), dans la zone de sortie de chaque éjecteur d'air (8), étant précisé que la valeur de l'angle de paroi (γ) est définie positivement avec une inclinaison de la paroi intérieure (10) dirigée vers l'axe longitudinal (5), et que l'angle de paroi (γ) est situé dans une plage de ≤ 20° inclus à ≥-10° inclus, et est en particulier d'au moins approximativement 0°.

3. Dispositif de vaporisation selon la revendication 1 ou 2,
**caractérisé en ce que** les éjecteurs d'air (8) sont conçus comme des éjecteurs plats présentant chacun un axe transversal long (11) et un axe transversal court (12), étant précisé que les deux axes transversaux longs (11) sont au moins approximativement parallèles.

4. Dispositif de vaporisation selon la revendication 3,
**caractérisé en ce que** le rapport d'une longueur (L) de l'axe transversal long (11) sur une longueur (1) de l'axe transversal court associé (12) est situé dans une plage de 3,0 inclus à 10,0 inclus, de préférence dans une plage de 4,0 inclus à 7,0 inclus, et est en particulier d'environ 5,4.

5. Dispositif de vaporisation selon l'une des revendications 1 à 4,
**caractérisé en ce que** les deux éjecteurs d'air (8) comportent des bords intérieurs (14) tournés l'un vers l'autre, avec un écartement latéral (a), étant précisé que l'écartement (a) est situé dans une plage de 10 mm inclus à 80 mm inclus, de préférence dans une plage de 20 mm à 50 mm inclus, et est en particulier d'environ 30 mm.

6. Dispositif de vaporisation selon l'une des revendications 1 à 5,
**caractérisé en ce qu'**une ligne de liaison des deux bords intérieurs (14) qui prédéfinit l'écartement (a), et l'axe longitudinal (5) forment une intersection (P), étant précisé qu'un côté sortie du vaporisateur de produit (4) est décalé par rapport à l'intersection (P), dans le sens de l'axe longitudinal (5), d'une distance de décalage (b), que la valeur de la distance de décalage (b) est définie positivement dans le sens de projection, et que la distance de décalage (b) est de préférence ≤ à la distance (a) et présente en particulier une valeur négative.

7. Dispositif de vaporisation selon l'une des revendications 1 à 6,
**caractérisé en ce que** les deux éjecteurs d'air (8) sont conçus comme des éjecteurs en éventail avec un angle d'ouverture (α), étant précisé que l'angle d'ouverture (α) est situé dans une plage de 10° inclus à 45° inclus et est en particulier d'environ 30°.

8. Dispositif de vaporisation selon l'une des revendications 1 à 7,
**caractérisé en ce que** le vaporisateur de produit (4) est conçu comme un vaporisateur en éventail avec un plan d'éventail (E), étant précisé que le plan d'éventail (E) est perpendiculaire au sens d'écartement latéral entre les deux éjecteurs d'air (8).

9. Dispositif de vaporisation selon la revendication 8,
**caractérisé en ce que** le vaporisateur de produit (4) conçu comme un vaporisateur en éventail présente un angle d'éventail (β), étant précisé que l'angle d'éventail (β) est situé dans une plage de 70° inclus à 120° inclus, et est en particulier d'environ 90°.

10. Dispositif de vaporisation selon l'une des revendications 1 à 9,
**caractérisé en ce que** le dispositif formant conduit d'air (3) est formé par un conduit d'air ramifié en forme de Y avec une section formant conduit d'entrée (6) et deux sections formant conduits de sortie (7).

11. Dispositif de vaporisation selon l'une des revendications 1 à 10,
**caractérisé en ce que** le vaporisateur de produit (4) est réalisé sous la forme d'un gicleur.

12. Appareil de vaporisation à main, comprenant
- un souffleur à main (1) avec une unité de soufflante (15) entraînée par un moteur, pour produire un courant d'air de soufflage (16), et un tube de soufflage (17) qui guide le courant d'air de soufflage (16),
- un réservoir de produit à vaporiser (18) qui est monté sur le souffleur (1), et un conduit de produit à vaporiser (19) qui mène du réservoir (18) à au moins une sortie (20) du tube de soufflage (17), et
- au moins un dispositif de vaporisation (2) selon l'une des revendications 1 à 11 qui est disposé à la sortie (20) du tube de soufflage (17).

13. Appareil de vaporisation à main selon la revendication 12,
**caractérisé en ce que** le dispositif de vaporisation (2) est fixé à la sortie (20) du tube de soufflage (17) de manière à pouvoir tourner sur son axe longitudinal (5).

14. Appareil de vaporisation à main selon la revendication 12 ou 13,
**caractérisé en ce qu'**il est prévu une pompe refoulante (36) pour le refoulement d'un produit à vaporiser (22) à travers le dispositif de vaporisation (2).

15. Appareil de vaporisation à main selon l'une des revendications 12 à 14,
**caractérisé en ce que** le tube de soufflage (17) comporte, à son extrémité opposée à l'unité de soufflante (15), au moins une sortie (20), sur laquelle est disposé le dispositif de vaporisation (2).

16. Appareil de vaporisation à main selon l'une des revendications 12 à 15,
**caractérisé en ce que** le tube de soufflage (17) comporte, sur le côté, au moins une et en particulier plusieurs sorties (20), sur chacune desquelles est disposé un dispositif de vaporisation (2).

17. Procédé pour faire fonctionner un appareil de vaporisation à main selon l'une des revendications 12 à 16,
étant précisé que le courant d'air de soufflage (16) dans les deux sections formant conduits de sortie (7) du dispositif formant conduit d'air (3) est divisé en deux courants d'air partiels (21) qui sortent des deux éjecteurs d'air (8), qu'il se forme entre les deux courants d'air partiels (21) un espace (9) au moins approximativement sans écoulement d'air, et qu'un produit à vaporiser (22) est atomisé en gouttelettes (23) dans l'espace sans écoulement d'air (9) à l'aide du pulvérisateur (4), et est introduit dans ledit espace (9).

18. Procédé selon la revendication 17,
**caractérisé en ce que** les deux courants d'air partiels (21) sortent des éjecteurs d'air (8) à une vitesse d'écoulement d'air (v) qui est située dans une plage de 30 m/s inclus à 120 m/s inclus et qui est en particulier d'environ 70 m/s.

19. Procédé selon la revendication 17 ou 18,
**caractérisé en ce que** le produit à vaporiser (22) qui est pulvérisé en gouttelettes (23) sort du vaporisateur à une vitesse de gouttelettes qui est située dans une plage de 2 m/s inclus à 40 m/s inclus et qui est en particulier d'environ 10 m/s.

20. Procédé selon l'une des revendications 17 à 19,
**caractérisé en ce que** le produit à vaporiser (22) est refoulé à travers le vaporisateur (4) à l'aide de la pompe refoulante (36) à une pression de produit à vaporiser, étant précisé que ladite pression de produit à vaporiser est située dans une plage de 2 bar inclus à 15 bar inclus et est en particulier d'environ 5 bar.

21. Procédé selon l'une des revendications 17 à 20,
**caractérisé en ce que** les deux courants d'air partiels (21) se rejoignent, à l'extrémité d'une trajectoire de couplage (e) qui part des éjecteurs d'air (8), en un point de couplage (E) de telle sorte qu'il se forme, à une distance (z) des éjecteurs d'air (8) qui est plus grande que ladite trajectoire de couplage (e), une section transversale d'écoulement d'air qui est au moins approximativement homogène, par rapport au sens latéral (x), étant précisé que la trajectoire de couplage (e) est située dans une plage de 50 mm inclus à 500 m inclus, et est en particulier d'environ 200 m.

22. Procédé selon la revendication 21,
**caractérisé en ce qu'**il se forme, à l'extrémité de la trajectoire de couplage (e), une différence de vitesse entre les courants d'air partiels (21) et les gouttelettes (23) qui est < 10 m/s et qui entraîne en particulier un nombre de Weber We < 12.

23. Procédé selon la revendication 21 ou 22,
**caractérisé en ce qu'**un mélange (35) des courants d'air partiels (21) et des gouttelettes (23) se forme en aval du point de couplage (E), étant précisé que le mélange (35) présente une vitesse de mélange qui est située dans une plage de 10 m/s inclus à 80 m/s inclus, et est en particulier d'environ 40 m/s.
